(19) Europäisches Patentamt
European Patent Office
Office européen des brevets

(11) **EP 2 369 368 A1**

(12) **EUROPEAN PATENT APPLICATION**

(43) Date of publication:
**28.09.2011 Bulletin 2011/39**

(51) Int Cl.:
***G01S 19/33*** (2010.01)  ***G01S 19/35*** (2010.01)

(21) Application number: **10002832.3**

(22) Date of filing: **18.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Astrium GmbH**
**82024 Taufkirchen (DE)**

(72) Inventor: **Hermsen, Markus**
**82194 Gröbenzell (DE)**

(74) Representative: **Häußler, Henrik**
**EADS Deutschland GmbH**
**Dept. CTOIPOD**
**81663 München (DE)**

(54) **A flexible GNSS receiver RF frontend**

(57)  The invention relates to a flexible GNSS receiver RF frontend (10) comprising
an adjustable input band-pass filter unit (12) for filtering a carrier frequency signal being modulated with GNSS information and received by means of an antenna (20),
a mixer unit (14, 15) for mixing the output signal of the input band-pass filter unit with a reference clock signal and generating a low- or band-pass filtered output signal comprising GNSS information modulated onto the carrier frequency, wherein the filter-characteristic of the mixer unit are adjustable in order to adapt it to the dedicated bandwidth requirements of the received carrier frequency signal,
an adjustable gain amplifier (16) for amplifying the low- or band-pass filtered output signal, and
an analog-to-digital converter (18) for digitizing the amplified low- or band-pass filtered output signal.

Fig. 1

EP 2 369 368 A1

## Description

TECHNICAL FIELD

The invention relates to a flexible GNSS receiver RF frontend according to claim 1.

BACKGROUND

At present, mainly two types of GNSS (Global Navigation Satellite System) receivers are available on the market: Consumer receivers for consumer devices such as portable navigation devices or integrated solutions for embedding GNSS functionality in devices such as smart phones, mobile phones, PDAs (Personal Digital Assistants), portable computers etc.; high-end receivers for commercial applications.

While consumer receivers are optimized in terms of costs, features and size and become more standardized products with lower flexibility, high-end receivers are usually more flexible since they have in nearly all cases flexible hardware and software interfaces.

SUMMARY OF INVENTION

It is an object of the invention to provide a novel architecture for a GNSS receiver RF frontend.

This object is achieved by the subject matter of the independent claims. Further embodiments are shown by the dependent claims.

The invention provides a novel GNSS receiver RF frontend architecture, which may combine the flexibility of current high-end receivers with the cost advantages of consumer receivers. In order to accomplish this, the invention suggests a flexible, particularly programmable and adjustable RF frontend architecture, which is scalable in order to create mutli-channel frontends, i.e. frontends suitable to receive satellite signals from different GNSSs such as from NAVSTAR-GPS and the European GNSS called Galileo.

An embodiment of the invention relates to a flexible GNSS receiver RF frontend comprising

an adjustable input band-pass filter unit for filtering a carrier frequency signal being modulated with GNSS information and received by means of an antenna , and

a mixer unit for mixing the output signal of the input band-pass filter unit with a reference clock signal and generating a low- or band-pass filtered output signal comprising GNSS information modulated onto the carrier frequency. The mixer unit comprises a mixer and a filter for filtering the low frequency output signal of the mixer. On the Low Frequency output side of the mixer a low pass filter, or instead a band-pass filter in case the RF structure is not a zero IF direct conversion architecture may be implemented. The filter-characteristics of this filter, been located after the mixer is also adjustable and such ways can be adapted to the dedicated bandwidth requirements of any incoming GNSS signal, i.e. the received carrier frequency signal.

Furthermore, an adjustable gain amplifier for amplifying the low- or band-pass filtered output signal, and

an analog-to-digital converter for digitizing the amplified low- or band-pass filtered output signal are part of the RF frontend.

This RF frontend architecture can be implemented as integrated circuit or as part of a chip-set for a versatile GNSS receiver. It can be realized as a physically independent component (an individual chip), as part of a SIP (System in Package) concept resulting in a single chip RF/Baseband combination or as a part of a single die architecture where the RF frontend is realized together with a baseband structure and eventually a powerful processor on one single die which finally results in a single chip GNSS receiver.

The input band-pass filter unit may be an adaptive software configurable input band-pass filter unit. This flexible band-pass filter design at the input can be adapted to the required needs of the RF frontend, for example to the GNSS signals, which should be received.

Particularly, the input band-pass filter and/or the filter of the mixer unit may comprise a filter adjustment unit being adapted to adjust the filtering characteristics of the input band-pass filter unit depending on Almanach, time, position and/or receiver heading and/or velocity onto single weak satellite signals. This allows to significantly increase the sensitivity of the RF frontend for satellite signals.

The input band-pass filter unit may comprise

a first band-pass filter for filtering the carrier frequency signal,

a low-noise amplifier for amplifying the output signal of the first band-pass filter, and

a second band-pass filter for filtering the output signal of the low-noise amplifier.

The input band-pass filter unit, a mixer and a filter of the mixer unit may as well be implemented in a combined way by a digital sampling filter - mixer combination which might bring in certain advantages especially as it can substantially increase the adjustment range of the RF frontend itself.

Such architecture of the input band-pass filter unit may be implemented with a low noise figure, with a large-signal stability, a linear power dependency, and particularly a pass-band attenuation of about 1 dB or less.

The frontend may further comprise a reference clock generation unit for providing the reference clock signal.

The reference clock generation unit may comprise

a phase locked loop, which comprises a phase-frequency discriminator, a charge pump , and cascaded fraction N dividers ,

a voltage controlled oscillator being controlled by the phased locked loop and generating a clock signal, and

one or more dividers for dividing the clock signal down close to the carrier frequency in order to generate the reference clock signal comprising two reference clock signals with a 90° phase offset.

The frontend may further comprise biasing means for biasing the correction signal of the phase locked loop for the voltage controlled oscillator. With this the start-up behavior may be improved.

Additionally the frontend may comprise a temperature compensation loop for directly or indirectly affecting a main oscillator, which can be a TCXO or an XO with at least a small frequency tuning option. The loop may comprise a temperature sensor, a digital regulation and a lookup-table which can directly finetune an external TCXO or XO with a control signal.

The analog-to-digital converter may be adapted to perform a 4-bit quantization of the amplified low- or band-pass filtered output signal. This results in an increased accuracy in contrast to the usual 2-Bit quantization. The increased accuracy may pay off at later signal integration in a baseband section.

A further embodiment of the invention relates to a multi-channel flexible GNSS receiver RF frontend comprising for at least one channel a flexible GNSS receiver RF frontend of the invention and as described above. This may also comprise the option to cascade multiple of these frontends to one large multi-channel frontend.

The multi-channel flexible GNSS receiver RF frontend may further comprise

a first channel with its GNSS receiver RF frontend being adapted for receiving, processing and outputting a digitized GPS signal in the baseband, and

a second channel being adapted with its flexible GNSS receiver RF frontend for receiving, processing and outputting a digitized Galileo signal in the baseband. The RF frontend of the first channel may be also a flexible GNSS receiver RF frontend according to the invention,

A yet further embodiment of the invention relates to a GNSS receiver platform comprising

a multi-channel flexible GNSS receiver RF frontend of the invention and as described above, and

a baseband processing unit being adapted to further process the output signals of the frontend received with the channels. These signals are generally the carrier frequency signals received with the individual channels.

Further adaptations of the platform are possible. For example, the platform can be adapted to receive more signal channels than the number of channels the RF frontend offers by running one or more of the RF channels in a time multiplexed manner. By this e.g. a 2 channel RF frontend could receive signals on 3 or 4 independent satellite bands. The platform can be also adapted to use all or a major number of available channels initially on the same satellite signal to speed up the initial acquisition of a satellite fix. The platform can be adapted to use one or more channels to focus in terms of centre frequency and bandwidth on single weak, jammed or spoofed satellites by respecting the actual receiver heading, speed and or position with respect to the Almanac data of this specific satellite. Furthermore, the platform can be adapted to use one or more channels to acquire satellites of different GNSS systems than those been part of the initial channel system. The platform may be also adapted to receive different channels which may have different center frequencies and/or different bandwidths in a time multiplexed way on one RF channel.

These and other aspects of the invention will be apparent from and elucidated with reference to the embodiments described hereinafter.

The invention will be described in more detail hereinafter with reference to exemplary embodiments. However, the invention is not limited to these exemplary embodiments.

BRIEF DESCRIPTION OF DRAWINGS

Fig. 1    shows an embodiment of the flexible GNSS receiver RF frontend with one channel according to the invention;

Fig. 2    shows an embodiment of a reference clock generation circuit for a one channel flexible GNSS receiver RF frontend according to the invention;

Fig. 3    shows an embodiment of a reference clock generation circuit for a two channel flexible GNSS receiver RF frontend according to the invention; and

Fig. 4    shows an embodiment of the flexible GNSS receiver RF frontend with two channels according to the invention.

DESCRIPTION OF EMBODIMENTS

In the following description of embodiments of the invention, functionally similar or identical elements may have the same reference numerals.

The novel and inventive RF frontend as described in the following is provided for receiving satellite signals from (NAVSTAR-)GPS and the planned European GNSS called GALILEO. Even though also GLONASS and COMPASS (Beijdou) signals might be received with this architecture (GLONASS mainly in a time multiplexed operation). In case of the normally intended operation the RF frontend supports on it's main reception path (channel) GPS L1 and GALILEO L1 C signals. Both signals have the identical centre frequency of 1,57542GHz. For both GNSS the signals at this frequency are used for the public or "open" services. The difference between GALILEO and GPS at this frequency is that GALILEO occupies a Bandwidth of 40,92MHz whereas GPS only occupies 20,46MHz.

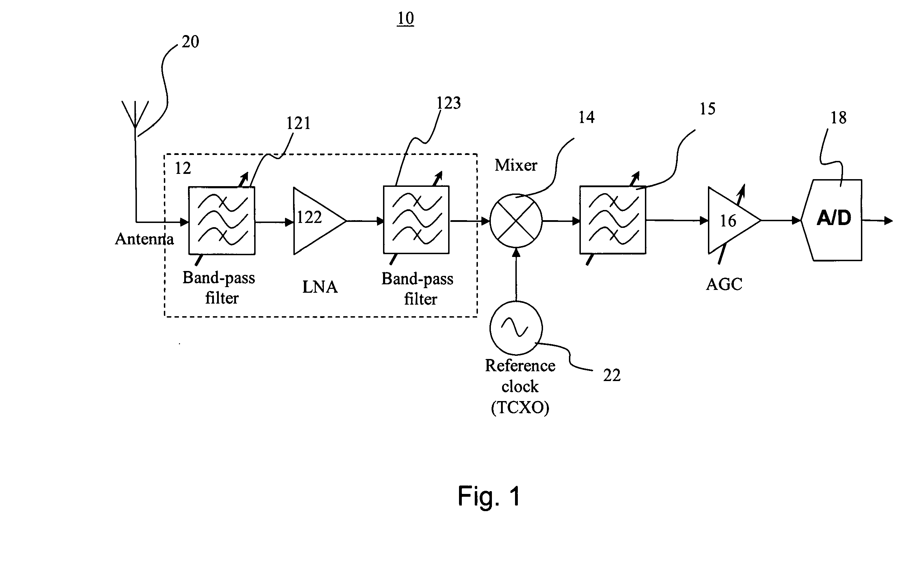

Fig. 1 shows a GNSS receiver RF frontend 10 with one receiver channel, which is suitable for receiving GPS/GALILEO satellite signals. The frontend 10 comprises an adjustable input band-pass filter unit 12 for filtering a carrier frequency satellite signal, which is modulated with GPS/GALILEO information and received by means of an antenna 20. The input band-pass filter unit 12 comprises an adjustable first band-pass filter 121, which is fed with the signal received by the antenna 20, a low-noise amplifier (LNA) 122, which amplifies the band-pass filtered output signal of the first band-pass filter 121, and an adjustable second band-pass filter 123 for band-pass filtering the output signal of the LNA 122. A mixer unit for generating a filtered output signal comprising GNSS information modulated onto the carrier frequency comprises a mixer 14 for mixing the band-pass filtered carrier frequency satellite signal, which is output from the input band-pass filter unit 12, with a reference clock signal from a reference clock generation unit 22 and an adjustable low- or band-pass filter 15 for filtering the output signal of the mixer 14 in order to low- or band-pass filter the carrier frequency satellite signal and to generate an output signal comprising the GPS/GALILEO information modulated onto the carrier frequency. It can be a direct conversion (zero IF) or a low IF mixer architecture. The filtered output signal of the mixer stage is then amplified by means of an adjustable gain amplifier 16. The so amplified signal is finally digitized by an analog-to-digital converter 18.

Although it's only a simplified line-up of the RF front-end, the frontend 10 of Fig. 1 visualizes that the LNA 122 as well as the Band-pass filters 121 and 123 have a major impact on the total Noise-figure of the frontend 10. It as well shows that with a fix band-pass filter (assuming a reasonable narrow pass-band) only such satellite signals can be tracked which transmit on the same frequency. For this reason such kind of architecture can only be used for the civil GPS L1 band. In order to cover also the GALILEO E2/L1/E1 open service signals the bandwidth of the first band-pass filter 121 can be widened up compared to the sole GPS L1 usage. Of course the pass-band might be widened up in a way that basically the whole L-Band is part of it but this would on one hand reduce significantly the sensitivity of the receiver and on the other hand it would make the receiver vulnerable for out-band jamming signals. So this approach is not advisable except for a tiny increase in bandwidth enabling GPS and GALILEO civil signal reception.

In the following, design options of the input band-pass filter unit 12 are briefly discussed.

In order to create a sensitive, jamming resistant multi frequency receiver there are two design options left: One is to create a separate band-pass per frequency which might be used. The other is to implement an adaptive SW configurable band-pass filter.

The first approach is old fashioned, will for sure work but might reduce the receiver sensitivity in general and does not provide an improved jamming stability (as the filters are fix and need to respect the maximum possible Doppler shift of the signals when been designed).

The novel second approach, can be realized in silicon and provides the option for unparalleled jamming stability and offers the opportunity to significantly increase the sensitivity by adjusting the filter precisely by knowledge of Almanach, time, position and receiver heading and velocity onto single weak satellites. This also allows to overcome cross correlation effects in case one satellite or pseudolite is received with a much stronger signal than another.

Furthermore, depending on the adaptive filter capabilities this concept might even provide a certain spoofing protection. As spoofing is a malicious in-band attack, ordinary receiver concepts can not be physically protected from it (except by using encrypted codes like e.g. the P(Y) code). In this case the spoofing device not only needs to send off the malicious data but also needs to transmit these data on appropriately Doppler shifted frequencies according the real satellite constellation. The requirement for successful spoofing would by this be increased by a significant technical hurdle.

In the following, the design of the reference clock generation unit 22 is discussed in detail.

One central element defining the quality of the final receiver directly is the clock generation within the front-end. Special care is required in the design of this stage.

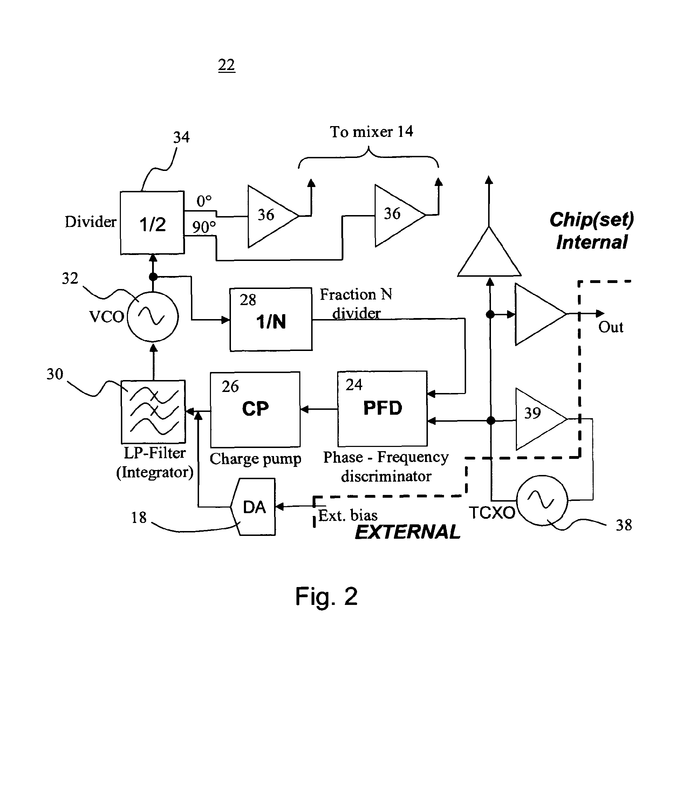

A more detailed line-up of the clock reference generation unit 22, particularly suitable for a typical 1,57542GHz signal receiver, is shown in Fig. 2. An external TCXO (Temperature Controlled Crystal Oscillator) is acting as a reference clock for the receiver. As this might at later times be replaced by a XO (Crystal Oscillator) the necessary ring-amplifier 39 is also implemented. This reference clock is used by a PLL (Phase-Lock-Loop) circuit comprising of a phase-frequency discriminator 24, a charge pump 26, a Low-Pass filter 30 serving as integrator, and cascaded Fraction N dividers 28 (only one divider is shown). This PLL controls the oscillation of an embedded VCO (Voltage controlled Oscillator) 32 which generates an output signal been at least a factor 2 higher than the carrier frequency of the received satellite signal (factor 4 would also be possible). This signal is subsequently divided down by a divider 34 (been realized for example by a binary modulo 2 adder) close to the carrier frequency. Thus, two signals orthogonal in phase (90° phase offset) are obtained which are buffered with buffers 36 and fed into the mixer 14 of the RF frontend 10.

For improved start-up behaviour the correction signal of the PLL can be externally biased by means of the digital output signal of an analog-to-digital converter 18. This feature can be essential if operating the circuit with an external XO only instead of using a TCXO. It can also be important that also the division ratio of the cascaded fraction N divider 28 can be set externally in order to accommodate for different carrier frequencies. This detail is not shown in Fig. 2 to keep the drawing simple. Also not shown is a possible temperature control loop which may autonomously run in the RF section and has a similar function than the external biasing option.

Finally the buffered TCXO (or XO) reference clock signal is fed out as frequency reference signal for a PLL circuit (which is not shown here for simplicity reason but been left out in Fig.2) which generates an RF signal close to the desired carrier frequency. This RF signal is used as a Local oscillator input in the mixer 14. Another buffer can be provided to feed this reference clock signal to the baseband circuit as this part also requires a very accurate reference clock for it's DLLs (Delay Locked Loops).

For the proper operation of the receiver the whole clock generation should operate Noise- and Jitter-free. To achieve this, special care should be taken with the fraction N divider as odd division ratios easily can lead to jitter problems.

Due to the same reason a very good decoupling of this stage should to be achieved versus the baseband section and power fluctuations have to be avoided, if the entire GNSS receiver is implemented as a single integrated circuit.

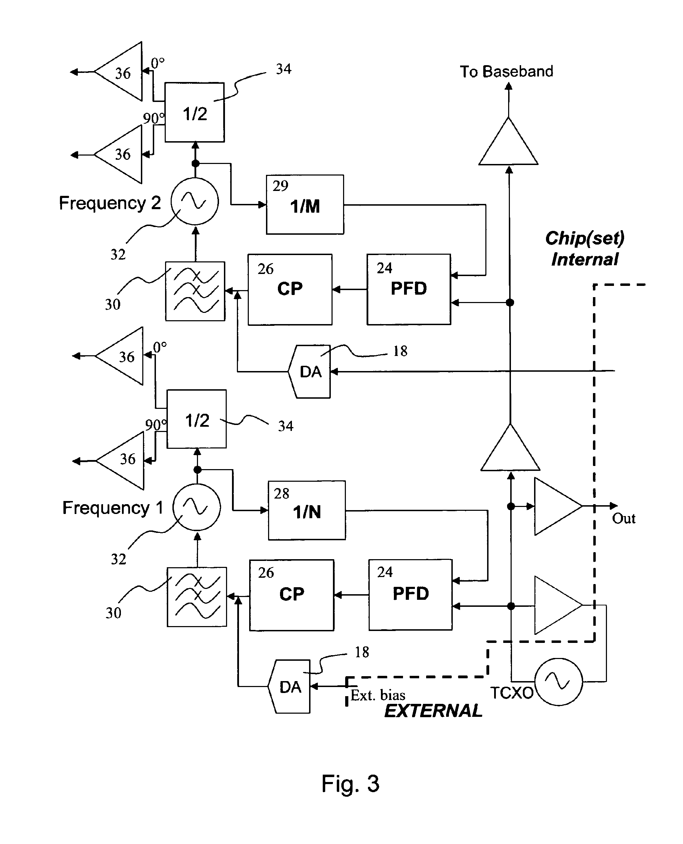

For a two channel flexible GNSS receiver RF frontend, which supports simultaneously the reception of two satellite signals with different carrier frequencies, the centre part of the reference clock generation unit needs to be duplicated. In this case two PLLs are required, which can be fed with the same reference clock. By using independent divider ratios both VCOs of the reference clock generation unit for a two channel flexible GNSS receiver RF frontend can be set to different frequencies. A design of the reference clock generation unit for a two channel flexible GNSS receiver RF frontend is shown in Fig. 3. The stage for generating the second reference clock Frequency 2 comprises a fraction M divider instead of the fraction N divider employed in the stage for generating the first reference clock Frequency 1.

In the following, the design of the mixer 14, the adjustable gain amplifier 16, and the analog-to-digital converter 18 is discussed.

As shown in Fig. 1, the local oscillator frequency generated by the reference clock generation unit 22 is fed onto a mixer 14. The output of this mixer 14 is low-pass filtered and contains the information modulated onto the carrier frequency by the satellites. As in the digital modulation scheme usually used for SatNav services an orthogonal phase modulation is used, the task is to recreate the digital data on the receiver side. For that reason the reference clock generator provides for each frequency two reference clock signals which have a 90° phase offset, as can be seen in the reference clock generation unit shown in Fig. 3.

To obtain the desired output these 90° offset reference clock signals need to be fed into separate mixers 14 of the mixer stage, each of which is also fed with the same RF output signal of the input band-pass filter unit 12. As result one I and one Q component signal of the signal comprising the GPS/GALILEO information and modulated onto the carrier frequency signal is obtained behind the mixer. After low pass or band pass filtering these I and Q component signals, mirror frequency residuals are eliminated. At this point care should be taken that the filtering of both I and Q component signals is done equally with respect to the phase delay.

After filtering out the unwanted signals each of the remaining I and Q component signals is fed over an AGC (Adjustable Gain Amplifier) 16 which is externally controlled by baseband software. By these amplifiers 16 the I and Q component signals are adjusted for entering the following analog-to-digital converters 18 with an optimal level. It is important that aside the same phase delay here also the same gain is applied to both the I and the Q channel. The gain control signal can be obtained by checking the absolute magnitude of the complex signals which is $\sqrt{I^2 + Q^2}$ and represents the incoming signal power.

For each I and Q component signal, an analog-to-digital converter 18 is provided. The analogue-to-digital conversion is usually done by a 2-Bit quantization per signal. Here it is recommended to use a 4-Bit quantization if possible as this increased accuracy pays off at later signal integration in a baseband section. Additionally this can mitigate for a lag in AGC adjustment in case of fast changing signal levels.

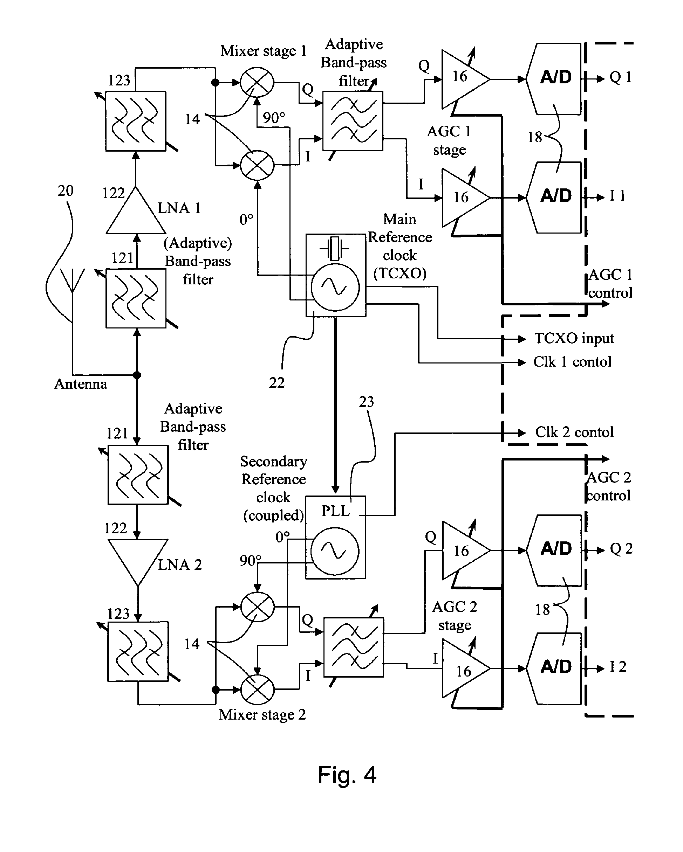

Also this entire stage comprising the mixer 14, the adjustable gain amplifier 16, and the analog-to-digital converter 18, needs to be realized twice in order to support a two channel RF front-end. The main elements of this two channel based RF front - end section is shown in Fig. 4. In Fig. 4, the reference clock generation unit 22 and 23 is shown only in a simplified way. The relevant clock systems 22 and 23 have to be replaced by a detailed system as shown in Figure 3 in order to obtain the detailed block-concept of the two channel flexible GNSS receiver RF frontend.

REFERENCE SIGNS LIST

10      flexible GNSS receiver RF frontend

12      input band-pass filter unit

121     first band-pass filter

122     low-noise amplifier

123     second band-pass filter

14    mixer

15    band-pass filter

16    adjustable gain amplifier

18    analog-to-digital converter

20    antenna

22    reference clock generation unit

23    secondary reference clock generation unit

24    phase-frequency discriminator

26    charge pump

28    fraction N divider

29    fraction M divider

30    low-pass filter

32    voltage controlled oscillator

34    divider

36    buffer

38    TCXO

39    ring amplifier

**Claims**

1.  A flexible GNSS receiver RF frontend (10) comprising
    an adjustable input band-pass filter unit (12) for filtering a carrier frequency signal being modulated with GNSS information and received by means of an antenna (20),
    a mixer unit (14, 15) for mixing the output signal of the input band-pass filter unit with a reference clock signal and generating a low- or band-pass filtered output signal comprising GNSS information modulated onto the carrier frequency, wherein the filter-characteristics of the mixer unit are adjustable in order to adapt it to the dedicated bandwidth requirements of the received carrier frequency signal,
    an adjustable gain amplifier (16) for amplifying the low- or band-pass filtered output signal, and
    an analog-to-digital converter (18) for digitizing the amplified low- or band-pass filtered output signal.

2.  The frontend of claim 1, wherein the input band-pass filter unit is an adaptive software configurable input band-pass filter unit.

3.  The frontend of claim 2, wherein the input band-pass filter unit and/or a filter of the mixer unit comprises a filter adjustment unit being adapted to adjust the filtering characteristics of the input band-pass filter unit depending on Almanach, time, position and/or receiver heading and/or velocity onto single weak satellite signals.

4.  The frontend of claim 1, 2 or 3, wherein the input band-pass filter unit comprises
    a first band-pass filter (121) for filtering the carrier frequency signal,
    a low-noise amplifier (122) for amplifying the output signal of the first band-pass filter, and
    a second band-pass filter (123) for filtering the output signal of the low-noise amplifier.

5.  A frontend of claim 1, 2, 3 or 4 wherein the input band-pass filter unit (12), a mixer (14) and a filter (15) of the mixer unit are implemented in a combined way by a digital sampling filter mixer combination.

6.  The frontend of any of the preceding claims, further comprising a reference clock generation unit (22) for providing the reference clock signal.

7.  The frontend of claim 6, wherein the reference clock generation unit (22) comprises
    a phase locked loop, which comprises a phase-frequency discriminator (24), a charge pump (26), and cascaded fraction N dividers (28),
    a voltage controlled oscillator (32) being controlled by the phased locked loop and generating a clock signal, and
    one or more dividers (34) for dividing the clock signal down close to the carrier frequency in order to generate the reference clock signal comprising two reference clock signal with a 90° phase offset.

8.  The frontend of claim 7, further comprising biasing means (36) for biasing the correction signal of the phase locked loop for the voltage controlled oscillator (32).

9.  The frontend of claims 6, 7 or 8 further comprising a temperature compensation loop for directly or indirectly affecting a main oscillator.

10. The frontend of any of the preceding claims, wherein the analog-to-digital converter (18) is adapted to perform a 4-bit quantization of the amplified low- or band-pass filtered output signal.

11. A multi-channel flexible GNSS receiver RF frontend comprising for
    at least one channel a flexible GNSS receiver RF frontend of any of the preceding claims.

**12.** The frontend of claim 11, comprising
a first channel being with its GNSS receiver RF frontend adapted for receiving, processing and outputting a digitized GPS signal in the baseband, and
a second channel being adapted with its flexible GNSS receiver RF frontend for receiving, processing and outputting a digitized Galileo signal in the baseband.

**13.** A GNSS receiver platform comprising
a multi-channel flexible GNSS receiver RF frontend of claim 11 or 12,
a baseband processing unit being adapted to further process the output signals of the frontend received with the channels..

**12.** The frontend of claim 11, comprising

Fig. 1

22

To mixer 14

Fig. 2

Fig. 3

Fig. 4

Europäisches
Patentamt

European
Patent Office

Office européen
des brevets

# EUROPEAN SEARCH REPORT

Application Number

EP 10 00 2832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/016454 A2 (FONDAZIONE TORINO WIRELESS [IT]; PIZZARULLI ANDREA [IT]; SENSALARI GIA) 5 February 2009 (2009-02-05) * abstract fig. 1 p. 1, l. 1-4 p. 2, l. 7-8 p. 3, l. 25 to p. 3, l. 2 p. 3, l. 15 to p. 4, l. 9 p. 4, l. 31 to p. 6, l. 4 * ----- | 1-13 | INV. G01S19/33 G01S19/35 |
| X A | US 2006/061691 A1 (RABINOWITZ MATTHEW [US] ET AL) 23 March 2006 (2006-03-23) * fig. 5 par. [0072]-[0076] * ----- | 1 2-13 | |
| A | HUEBER G ET AL: "Concept for an adaptive digital front-end for multi-mode wireless receivers" CIRCUITS AND SYSTEMS, 2008. ISCAS 2008. IEEE INTERNATIONAL SYMPOSIUM ON, IEEE, PISCATAWAY, NJ, USA, 18 May 2008 (2008-05-18), pages 89-92, XP031391916 ISBN: 978-1-4244-1683-7 * the whole document * ----- | 1-13 | **TECHNICAL FIELDS SEARCHED (IPC)**  G01S |
| A | HENTSCHEL T ET AL: "THE DIGITAL FRONT-END OF SOFTWARE RADIO TERMINALS" IEEE PERSONAL COMMUNICATIONS, IEEE COMMUNICATIONS SOCIETY, US LNKD-DOI:10.1109/98.788214, vol. 6, no. 4, 1 August 1999 (1999-08-01), pages 40-46, XP000849382 ISSN: 1070-9916 * the whole document * ----- -/-- | 1-13 | |

The present search report has been drawn up for all claims

| Place of search | Date of completion of the search | Examiner |
|---|---|---|
| Munich | 30 July 2010 | González Moreno, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 00 2832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | THORSTEN LUCK ET AL: "Trade-off between pure software based on FPGA based band processing for a real time kinematics GNSS receiver" ION GNSS. INTERNATIONAL TECHNICAL MEETING OF THE SATELLITEDIVISION OF THE INSTITUTE OF NAVIGATION, WASHINGTON, DC, US, no. 18TH, 13 September 2005 (2005-09-13), pages 1589-1597, XP003023241 * p. 1589 to 1591 * ----- | 1-13 | |

TECHNICAL FIELDS
SEARCHED      (IPC)

The present search report has been drawn up for all claims

| Place of search | Date of completion of the search | Examiner |
|---|---|---|
| Munich | 30 July 2010 | González Moreno, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 10 00 2832

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2010

| Patent document cited in search report | | Publication date | Patent family member(s) | Publication date |
|---|---|---|---|---|
| WO 2009016454 | A2 | 05-02-2009 | NONE | |
| US 2006061691 | A1 | 23-03-2006 | NONE | |

EPO FORM P0459

For more details about this annex : see Official Journal of the European Patent Office, No. 12/82